# EUROPEAN PATENT APPLICATION

(11) **EP 1 959 379 A1**
(43) Date of publication of application: **20.08.2008**
(21) Application number: 08002677.6
(22) Date of filing: 13.02.2008
(51) Int. Cl.: G06Q 10/00

(54) **On-line auction platform of capital pool**

(30) Priority: 15.02.2007 TW 96105772
(71) Applicant: Shacom.Com INC., Jhongsiao E. Rd. Taipei 115 (TW)
(72) Inventor: Chien, Yung-Sung, Taipei 115 (TW)
(74) Representative: Becker Kurig Straus

(57) **Abstract**

A method for on-line auction includes providing an on-line auction platform of capital pool (OLAPCP), proceeding with an on-line auction for a type1 member in an auction transaction pool of the OLAPCP according to a credit amount of the type1 member, and proceeding with the on-line auction for a type2 member in the auction transaction pool of the OLAPCP. The credit amount of the type1 member is determined by performing a credit check on the type1 member through a financial institution cooperating with the OLAPCP. Type1 membership is granted via a financial institution cooperating with the OLAPCP, and the type1 member processes the settlement and liquidation directly via the financial institution. The type2 membership is granted via the OLAPCP, and the type2 member processes a settlement and liquidation indirectly via the OLAPCP.

## Description

### Background of the Invention

### 1. Field of the Invention

The present invention relates to an on-line auction platform of capital pool (OLAPCP), and more particularly, to a method for determining a credit amount of a type1 member of the OLAPCP by performing a credit check on the type1 member through a financial institution cooperating with the OLAPCP.

### 2. Description of the Prior Art

With the improvement of computer technology and the increasing popularity of the Internet, the current trend of financial services industry is towards direct finance. For example, Zopa, the world's first social finance company, established an on-line lending and borrowing platform for users to be able to lend and borrow with each other. Similarly, Prosper in USA established an on-line auction platform with a concept of community lending and borrowing. Both companies perform the above-mentioned on-line platform user credit checks by themselves. However, they have to bear the credit risk for doing this, and the credit risk is extremely high. Performing credit checks by themselves is also not an efficient and convenient way to perform a credit check on users for the companies. Thus, there is a need to provide a method to reduce the risk and increase the efficiency on the task of checking users' credit and smoothly expanding the platform's turnover.

### Summary of the Invention

It is therefore one of the objectives of the present invention to outsource the credit checking task to a financial institution, to solve the above-mentioned problems.

According to an embodiment of the present invention, a method for on-line auction is disclosed. The method comprises: providing an on-line auction platform of capital pool (OLAPCP), and proceeding with an on-line auction for a type1 member in an auction transaction pool of the OLAPCP according to a credit amount of the type1 member determined by performing a credit check on the type1 member through a financial institution cooperating with the OLAPCP. The members for the OLAPCP are divided into type1 members and type2 members. Type1 membership is granted via a financial institution cooperating with the OLAPCP, and type2 membership is granted via the OLAPCP.

According to an embodiment of the present invention, an on-line auction platform of capital pool (OLAPCP) system is further disclosed. The OLAPCP system comprises a processor and a storage device, coupled to the processor for storing program codes including at least a proceeding subprogram. When the processor executes the program codes, the program codes provide an OLAPCP. The proceeding subprogram executed by the processor proceeds with an on-line auction for a type1 member in an auction transaction pool of the OLAPCP according to the credit amount of the type1 member determined by performing a credit check on the type1 member through a financial institution cooperating with the OLAPCP. The members for the OLAPCP are divided into type1 members and type2 members. The type1 membership is granted via a financial institution cooperating with the OLAPCP, and the type2 membership is granted via the OLAPCP.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a flowchart illustrating a method for establishing an OLAPCP according to an embodiment of the present invention.
FIG. 2 is a flowchart further illustrating a method of a financial institution applying for admission to the OLAPCP according to an embodiment of the present invention.
FIG. 3 is a flowchart further illustrating a method of a member logging into the OLAPCP according to an embodiment of the present invention.
FIG. 4 is a flowchart further illustrating a method for establishing an auction transaction pool according to an embodiment of the present invention.
FIG. 5 is a flowchart further illustrating a method of the OLAPCP generating a bidding result for the auction transaction pool according to an embodiment of the present invention.
FIG. 6 is a flowchart further illustrating a method of the OLAPCP processing the settlement and liquidation for the type1 member according to an embodiment of the present invention.
FIG. 7 is a diagram illustrating an OLAPCP system according to an embodiment of the present invention.

### Detailed Description

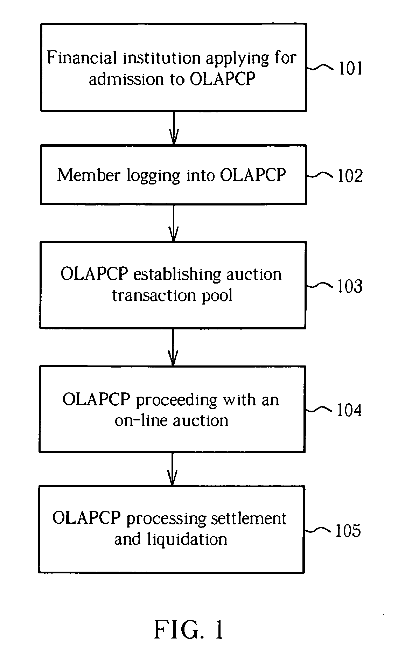

Please refer to FIG. 1. FIG. 1 is a flowchart illustrating a method for establishing an on-line auction platform of capital pool (OLAPCP) according to an embodiment of the present invention. As shown in FIG. 1, a financial institution initially applies for admission to the OLAPCP (Step 101). The financial institution in the present invention is a financial institution capable of performing a credit check. After the financial institution is verified and approved to access the OLAPCP, the financial institution is authorized to grant a user who wants to apply for being a member of the OLAPCP membership of the OLAPCP. In this embodiment, the financial institution is a bank, which is capable of performing a credit check, and the user may be a customer of the bank. The financial institution grants the user the membership by granting an electronic auction card with an ID and password. Please note that the financial institution in this embodiment is a bank; this is merely for illustrative purposes, however, and is not meant to be a limitation of the present invention. In other embodiments, the financial institution can be any financial institution capable of performing a credit check, such as a credit card institution, a savings institution or other financial services providers.

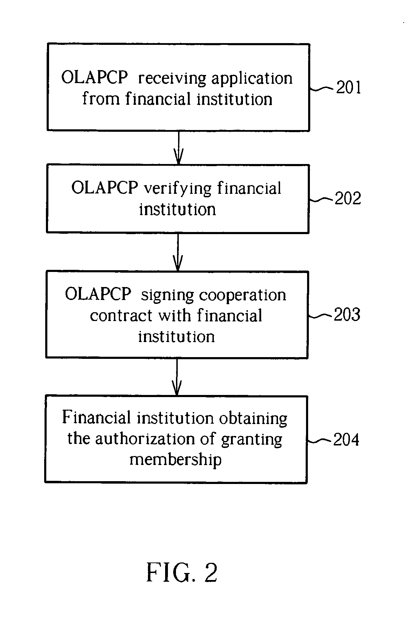

Please refer to FIG. 2. FIG. 2 is a flowchart further illustrating a method of a financial institution applying for admission to the OLAPCP according to an embodiment of the present invention. As shown in FIG. 2, the OLAPCP receives an application made by a financial institution for admission to the OLAPCP, and verifies the application of the financial institution (Step 201 and 202). Once the financial institution is approved, the OLAPCP signs a cooperation contract online with the financial institution (Step 203). The financial institution obtains authorization to grant OLAPCP membership (Step 204).

The OLAPCP members are divided into a type1 members and a type2 members depending on who grants the members membership of the OLAPCP respectively. Total auction amount for a type1 member includes a credit amount and an accumulated amount. The credit amount is determined by performing a credit check on the type1 member through a financial institution cooperating with the OLAPCP. The accumulated amount is determined according to the deposit in the OLAPCP of the type1 member, and may be equal to zero. On the other hand, the total auction amount of a type2 member includes only the accumulated amount; that is to say, the total auction amount is equal to the accumulated amount for the type2 member. Similarly, the accumulated amount is determined according to the deposit in the OLAPCP of the type2 member, and may be equal to zero.

For example, when a type1 user (e.g., a customer of a bank) applies to be a member of the OLAPCP through/via the financial institution (e.g., the bank), then the financial institution will verify the data content of the type1 user and performs a credit check on the type1 user to grant a credit amount for the OLAPCP according to the characteristics of the type1 user. Once the type1 user is approved, the type1 user becomes a type1 member of the OLAPCP and receives an electronic auction card. As another example, when a second user (e.g., a saver or an arbitrager) applies to be a member of the OLAPCP directly to the OLAPCP, the OLAPCP will verify the data content of the second user. Once the type2 user is approved, the type2 user becomes a type2 member of the OLAPCP and receives an electronic auction card as well.

The member can log into the OLAPCP with the ID and password within the received electronic auction card (Step 102) and participates in at least one of the various auction transaction pools in the OLAPCP after the ID and password are both authenticated by the information security verification.

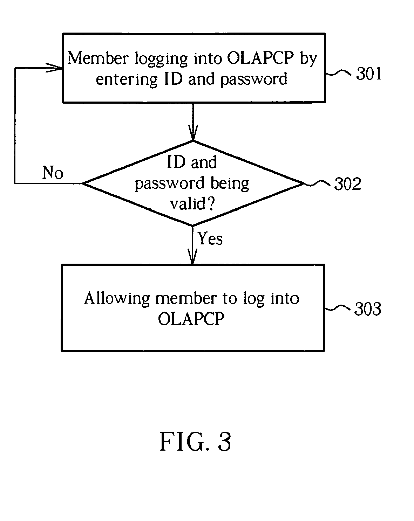

Please refer to FIG. 3. FIG. 3 is a flowchart further illustrating a method of a member logging into the OLAPCP according to an embodiment of the present invention. As shown in FIG. 3, a member logs into the OLAPCP by entering his ID and password (Step 301). The OLAPCP checks the entered ID and password (Step 302). Once the entered ID and password are both authenticated, the member is allowed to log into the OLAPCP (Step 303). Otherwise, the member is required to reenter his ID and password. For the member belonging to type 1 , if an incorrect ID and password have been entered by more than a preset permissible amount of times, the OLAPCP will ask the member to contact the financial institution corresponding to the member.

On the other hand, there are pluralities of different early-stage auction transaction pools in the OLAPCP. Each OLAPCP member is able to access any early-stage auction transaction pool. Each of the early-stage auction transaction pools respectively has criteria for establishing an auction transaction pool composed by the OLAPCP. Upon the criteria being satisfied, the OLAPCP establishes the auction transaction pool (Step 103). In this embodiment, the criteria for establishing an auction transaction pool are the auction transaction pool's requirement about the number of members.

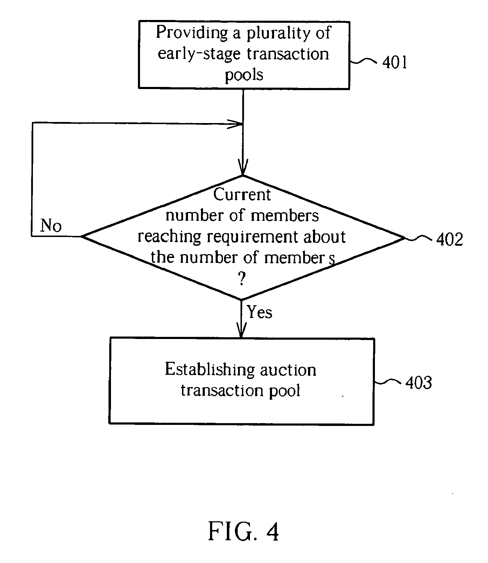

Please refer to FIG. 4. FIG. 4 is a flowchart further illustrating a method for establishing an auction transaction pool according to an embodiment of the present invention. As shown in FIG. 4, the OLAPCP provides a plurality of early-stage auction transaction pools with different characteristics (e.g., total terms, time interval, contribution amount and etc...) for members to select (Step 401). In addition, the OLAPCP checks a current number of members of every early-stage auction transaction pool to see if it reaches the auction transaction pool's requirement about the number of members (Step 402). Once the current number of members is satisfied as required for establishing an auction transaction pool, the OLAPCP establishes the auction transaction pool (Step 403).

Next, the OLAPCP proceeds with an on-line auction in the auction transaction pool for the members in the auction transaction pool (step 104). Although each OLAPCP member is able to access any early-stage auction transaction pools, only the member whose total auction amount is enough (i.e., the total auction amount is greater than or equal to the total repayment) in the auction transaction pool is able to enter a bidding price within a preset time. After the member enters a bidding price within a preset time, the OLAPCP checks if the entered bidding price is valid according to the entered bidding price and the moment in time at which the bidding price was entered. For example, if the entered bidding price is in a price range of the auction transaction pool and the moment for entering the bidding price is in a correct preset time for bidding, the OLAPCP determines the entered bidding price to be a valid bidding price. When the deadline for the auction transaction pool is past (expired), the OLAPCP generates a bidding result according to the plurality of valid bidding prices received for the auction transaction pool.

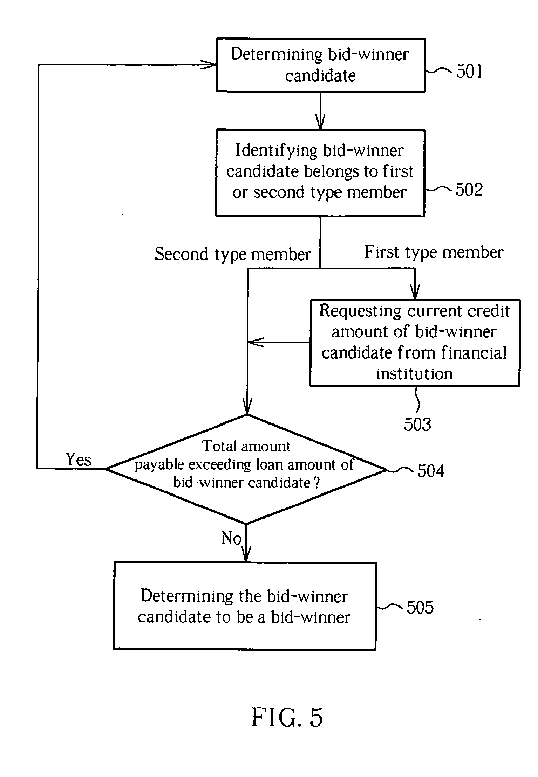

Please refer to FIG. 5. FIG. 5 is a flowchart further illustrating a method of the OLAPCP generates a bidding result for the auction transaction pool according to an embodiment of the present invention. As shown in FIG. 5, the OLAPCP determines a bid-winner candidate according to the plurality of valid bidding prices for the auction transaction pool (Step 501) and determines whether the bid-winner candidate is a type1 member or a type2 member (Step 502). When the bid-winner candidate is a type1 member, the OLAPCP will request the current credit amount information of the bid-winner candidate from the financial institution (e.g., the bank) corresponding to the bid-winner candidate (Step 503). After the OLAPCP receives the current credit amount of the bid-winner candidate transmitted from the financial institution, the OLAPCP updates the total auction amount of the bid-winner candidate according to the received credit amount and checks if a total repayment of the auction transaction pool exceeds the updated total auction amount to generate a check result (Step 504).

When the bid-winner candidate is a type2 member, the OLAPCP will directly check if the total repayment of the auction transaction pool exceeds the total auction amount of the bid-winner candidate to generate a check result (Step 504). Next, if the check result indicates the total repayment does not exceed the total auction amount of the bid-winner candidate, the OLAPCP determines the bid-winner candidate to be a bid-winner and generates a bidding result (Step 505). Otherwise, the bidding price is abandoned and the OLAPCP determines another bid-winner candidate according to the remaining valid bidding prices until the bidding result is generated by the OLAPCP.

Please note that when determining whether the type1 member is a bid winner, the OLAPCP requests the current credit amount information. In addition, the financial institution transmits the credit amount information of the type1 member to the OLAPCP immediately after granting the credit amount to the type1 member. These are, however, only for illustration purposes and should not be deemed to be limitations of the present invention.

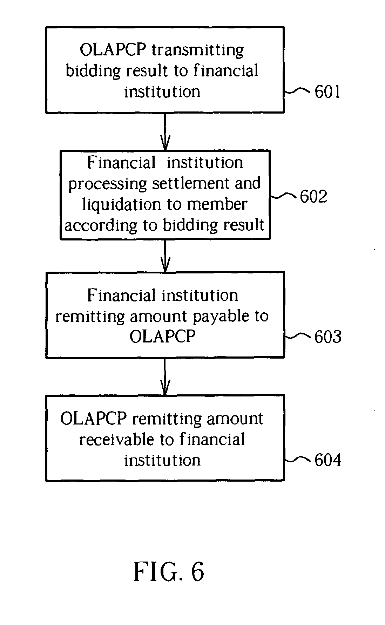

Finally, the OLAPCP processes the settlement and liquidation for the auction transaction pool according to the bidding result (Step 105), wherein the settlement and liquidation is a net settlement and liquidation. Please refer to FIG. 6. FIG. 6 is a flowchart further illustrating a method of the OLAPCP processing the settlement and liquidation for the type1 member according to an embodiment of the present invention. As shown in FIG. 6, the OLAPCP transmits the bidding result of the auction transaction pool to the financial institutions that the type1 members in the auction transaction pool belong to (Step 601). Each of the financial institutions processes a first settlement and liquidation to the type1 members according to the bidding result transmitted from the OLAPCP and generates an amount payable (Step 602). Each of the financial institutions remits the amount payable to the OLAPCP (Step 603). The OLAPCP remits an amount receivable generated according to the bidding result to each of the financial institutions respectively, to complete a second settlement and liquidation to the financial institutions for the auction transaction pool (Step 604). For the type2 members in the auction transaction pool, the OLAPCP directly processes the settlement and liquidation to the type2 members according to the bidding result of the auction transaction pool. Further description is omitted for the sake of brevity.

Please note that the financial institution remits the amount payable to the on-line platform of capital pool before the OLAPCP remits the amount receivable to the financial institution in this embodiment; this is, however, not a limitation of the present invention. For example, the financial institution can remit the amount payable to the on-line platform of capital pool after the OLAPCP remits the amount receivable to the financial institution. In another embodiment, the financial institution remits the amount payable to the on-line platform of capital pool and the OLAPCP remits the amount receivable to the financial institution in a real-time execution. These alternative settlement and liquidation methods also fall within the scope of the present invention.

The following exemplary embodiment is for a type 1 member M1 in the OLAPCP. The M1 membership is granted via a financial institution (e.g., a bank) cooperating with the OLAPCP, and the financial institution also grants a credit amount to M1. In addition, M1 processes a settlement and liquidation indirectly via the financial institution. After M1 logs into the OLAPCP, M1 can select one or more early-stage auction transaction pools provided by the OLAPCP to participate in. It is assumed in this example that M1 selects an early-stage auction transaction pool ESATP1, whose contribution amount and total terms are respectively $10,000 and 24. If the bidding price entered by M1 is $1,000, which is the highest bidding price in ESATP1 in term 1, M1 will be determined to be a bid-winner candidate of ESATP1. Thus, the total repayment for M1 is equal to $10,000*(24-1)= $230,000. If the total auction amount of M1 is less than the total repayment for M1 (for example, the total auction amount of M1 is equal to $210,000), M1 will not be determined to be the bid-winner of ESATP1. When the total auction amount of M1 is greater than or equal to the total repayment for M1 (for example, the total auction amount of M1 is equal to $250,000), M1 will be determined to be the bid-winner of ESATP1. Since the total auction amount of M1 includes the credit amount granted by the financial institution, the OLAPCP has to request the current credit amount information of M1 from the financial institution to update the total auction amount of M1, so as to check whether the total repayment exceeds the total auction amount. Once M1 is determined to be the bid-winner of ESATP1, the total repayment for M1 (i.e., $230,000) is deducted from the total auction amount of M1. In addition, M1 will receive $207,000 (i.e., the funds to bid-winner = ($10,000-$1,000)*(24-1)) from the financial institution in term 1, and will pay $10,000 (the contribution amount) to the financial institution in each following term (term 2-24).

The following exemplary embodiment is for a type2 member M2 in the OLAPCP. The M2 membership is granted via the OLAPCP, and M2 processes the settlement and liquidation directly via the OLAPCP After M2 logs into the OLAPCP, M2 can select one or more early-stage auction transaction pools provided by the OLAPCP to participate in. It is assumed in this example that M2 selects an early-stage auction transaction pool ESATP2, whose contribution amount and total terms are $10,000 and 12, respectively. If the bidding price entered by M2 is $2,000, which is the highest bidding price in ESATP2 in term 1, M2 will be determined to be the bid-winner candidate of ESATP2. Thus, the total repayment for M2 is equal to $10,000*(12-1)= $110,000. If the total auction amount of M2 is less than the total repayment for M2 (for example, the total auction amount of M2 is equal to $100,000), M2 will not be determined to be the bid-winner of ESATP2. When the total auction amount of M2 is greater than or equal to the total repayment for M2 (for example, the total auction amount of M2 is equal to $120,000), M2 will be determined to be the bid-winner of ESATP2. Since the total auction amount of M2 only includes the accumulated amount, the OLAPCP doesn't have to request the current credit amount information of M2 from the financial institution to update the total auction amount of M2. Once M2 is determined to be the bid-winner of ESATP2, the total repayment for M2 (i.e., $110,000) is deducted from the total auction amount of M2. In addition, M2 will receive $88,000 (i.e., the funds to bid-winner = ($10,000-$2,000) *(12-1)) from the OLAPCP in term 1, and will pay $10,000 (the contribution amount) to the OLAPCP in each following term (term 2-12).

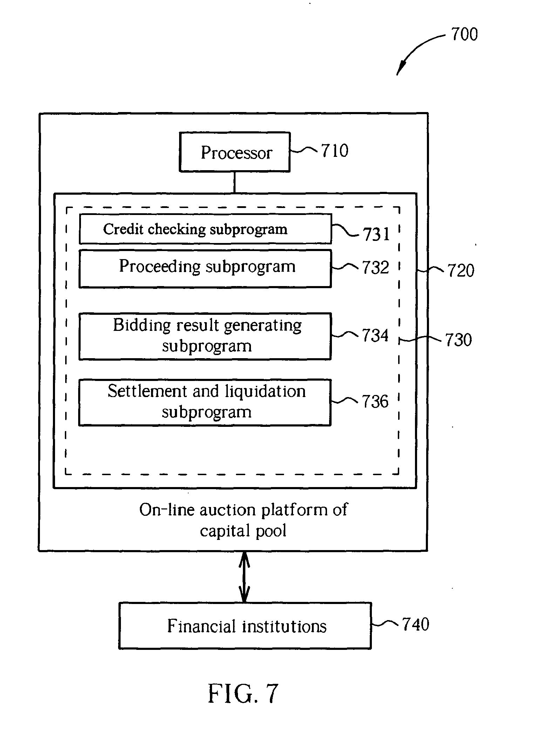

Please refer to FIG. 7. FIG. 7 is a diagram illustrating an on-line auction platform of capital pool (OLAPCP) system 700 according to an embodiment of the present invention. As shown in Fig. 7, the OLAPCP system 700 includes a processor 710 and a storage device 720. The storage device 720 is coupled to the processor 710 for storing program codes 730 including a credit checking subprogram 731, a proceeding subprogram 732, a bidding result generating subprogram 734 and a settlement and liquidation subprogram 736. When the processor 710 executes the program codes 730, the program codes 730 provide an OLAPCP. After the type1 or type2 member enters a bidding price, the processor 710 executes the credit checking subprogram 731 to verify whether the entered bidding price is valid. If the entered bidding price is valid, the bidding price was entered. Moreover, after a bid-winner candidate is selected, the processor 710 executes the credit checking subprogram 731 to verify whether a total repayment of the auction transaction pool exceeds the total auction amount. If the check result indicates the total repayment does not exceed the total auction amount of the bid-winner candidate, the OLAPCP determines the bid-winner candidate to be a bid-winner. Otherwise, the bidding price is abandoned. The processor 710 executes the proceeding subprogram 732 for proceeding with an on-line auction for a type1 member in an auction transaction pool of the OLAPCP according to a credit amount of the type1 member determined by performing a credit check on the type1 member through a financial institution cooperating with the OLAPCP. The processor 710 executes the bidding result generating subprogram 734 for generating a bidding result of the auction transaction pool. The processor 710 executes the settlement and liquidation subprogram 736 for processing a settlement and liquidation to the member according to the bidding result. Since a person skilled in the art can readily appreciate the operations of the aforementioned subprograms after reading the above disclosure, further description is omitted here for the sake of brevity.

By taking the advantage of using a financial institution (e.g., a bank) cooperating with the OLAPCP to perform a credit check, the credit risk to and system burden of the OLAPCP can be tremendously decreased because the financial institution must bear the credit risk in proportion to the credit amount granted to the type1 member. In addition, the present invention provides a more efficient and convenient procedure to process the settlement and liquidation.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method for on-line auction, comprising:
providing an on-line auction platform of capital pool (OLAPCP); and
proceeding with an on-line auction for a type1 member in an auction transaction pool of the OLAPCP according to a credit amount of the type1 member determined by performing a credit check on the type1 member through a financial institution cooperating with the OLAPCP.

2. The method of claim 1, wherein membership of the type1 member is granted via the financial institution.

3. The method of claim 1, further comprising:
generating a bidding result of the auction transaction pool; and
processing a settlement and liquidation to the type1 member according to the bidding result;
wherein the settlement and liquidation is a net settlement and liquidation.

4. The method of claim 3, wherein the step of processing the settlement and liquidation comprises:
processing a first settlement and liquidation to the type1 member by the financial institution; and
processing a second settlement and liquidation to the financial institution by the OLAPCP

5. The method of claim 4, wherein the step of processing the second settlement and liquidation comprises:
remitting an amount payable to the OLAPCP by the financial institution; and
remitting an amount receivable to the financial institution by the OLAPCP.

6. The method of claim 5, wherein the step of processing the second settlement and liquidation further comprises remitting the amount payable
and remitting the amount receivable in a real-time execution.

7. The method of claim 5, wherein the step of processing the second settlement and liquidation further comprises remitting the amount payable after remitting the amount receivable.

8. The method of claim 5, wherein the step of processing the second settlement and liquidation further comprises remitting the amount payable before remitting the amount receivable.

9. The method of claim 1, wherein the step of proceeding with the on-line auction for the type1 member in the auction transaction pool of the OLAPCP further comprises: proceeding with the on-line auction for a type2 member in the auction transaction pool of the OLAPCP.

10. The method of claim 9, wherein membership of the type1 member is granted via the financial institution, and membership of the type2 member is granted via the OLAPCP.

11. An on-line auction platform of capital pool (OLAPCP) system, comprising:
a processor (710);
a storage device (720), coupled to the processor (730), for storing program codes including at least a proceeding subprogram (732), wherein when the processor (730) executes the program codes, the program codes provide an OLAPCP, the proceeding subprogram (732),executed by the processor (710), proceeds with an on-line auction for a type1 member in an auction transaction pool of the OLAPCP according to a credit amount of the type1 member determined by performing a credit check on the type1 member through a financial institution (740) cooperating with the OLAPCP.

12. The OLAPCP system of claim 11, wherein the type1 membership is granted via the financial institution (740).

13. The OLAPCP system of claim 11, wherein the program code further comprises:
a bidding result generating subprogram (734), for generating a bidding result of the auction transaction pool; and
a settlement and liquidation subprogram (736), for processing a settlement and liquidation to the type1 member according to the bidding result;
wherein the settlement and liquidation is a net settlement and liquidation.

14. The OLAPCP system of claim 13, wherein the financial institution (740)processes a first settlement and liquidation to the type1 member, and the settlement and liquidation subprogram (736) executed by the processor (710)processes a second settlement and liquidation to the financial institution (740)by the OLAPCP.

15. The OLAPCP system of claim 14, wherein the financial institution (740) remits an amount payable to the on-line platform of capital pool, and the settlement and liquidation subprogram (736) executed by the processor (710) remits an amount receivable to the financial institution (740)by the on-line platform of capital pool.

16. The OLAPCP system of claim 15, wherein the financial institution (740) remits the amount payable to the on-line platform of capital pool and the settlement and liquidation subprogram (736) executed by the processor (710) remits the amount receivable to the financial institution (740)by the on-line platform of capital pool in a real-time execution.

17. The OLAPCP system of claim 15, wherein the financial institution (740) remits the amount payable to the on-line platform of capital pool after the settlement and liquidation subprogram (736) executed by the processor (710) remits the amount receivable to the financial institution (740) by the on-line platform of capital pool in a real-time execution.

18. The OLAPCP system of claim 15, wherein the financial institution (740) remits the amount payable to the on-line platform of capital pool before the settlement and liquidation subprogram (736) executed by the processor (710) remits the amount receivable to the financial institution (740) by the on-line platform of capital pool in a real-time execution.

19. The OLAPCP system of claim 11, wherein the proceeding subprogram (732) executed by the processor (710) further proceeds with the on-line auction for a type2 member in the auction transaction pool of the OLAPCP.

20. The OLAPCP system of claim 19, wherein membership of the type1 member is granted via the financial institution (740), and membership of the type2 member is granted via the OLAPCP system.

21. The OLAPCP system of claim 11, wherein the program code further comprises a credit checking subprogram (731), the processor (710) executes the credit checking subprogram (731) to verify whether the entered bidding price is valid after a user enters a bidding price, and to verify whether a total repayment of the auction transaction pool exceeds a total auction amount after a bid-winner candidate is selected.

22. A method for on-line auction, comprising:
proceeding with an on-line auction for a type 1 member in an auction transaction pool of an on-line auction platform of capital pool (OLAPCP) according to a credit amount of the type1 member determined by performing a credit check on the type1 member through a financial institution cooperating with the OLAPCP;
generating a bidding result of the auction transaction pool;
processing a settlement and liquidation to the type1 member according to the bidding result by the financial institution;
remitting an amount payable to the OLAPCP by the financial institution; and
remitting an amount receivable to the financial institution by the OLAPCP.
